# EUROPÄISCHE PATENTSCHRIFT

(11) **EP 0 450 178 B1**
(45) Veröffentlichungstag und Bekanntmachung des Hinweises auf die Patenterteilung: **08.03.1995**
(21) Anmeldenummer: 90124857.5
(22) Anmeldetag: 20.12.1990
(51) Int. Cl.: C08L 69/00, C08K 7/14

(54) **Oxidiertes Polyethylen enthaltende glasfaserverstärkte Polycarbonate**
Glass fibre reinforced polycarbonates containing oxidized polyethylene
Polycarbonates renforcés avec des fibres de verre et contenant du polyéthylène oxydé

(30) Priorität: 02.03.1990 DE 4006519; 16.11.1990 DE 4036590
(43) Veröffentlichungstag der Anmeldung: 09.10.1991
(73) Patentinhaber: BAYER AG, 51368 Leverkusen (DE)
(72) Erfinder: Kircher, Klaus, Dr., W-5090 Leverkusen (DE); Meier, Helmut-Martin, Dr., W-4030 Ratingen 6 (DE); Horn, Klaus, Dr., W-4150 Krefeld (DE); Pilzecker, Helmut, Dr., W-4150 Krefeld (DE)

(56) Entgegenhaltungen:
- EP-A- 0 216 267
- EP-A- 0 262 566
- DE-A- 1 965 125
- DE-A- 3 325 702
- FR-A- 2 212 374
- JP-A-48 040 848
- JP-A-57 200 444
- US-A- 3 769 260
- US-A- 4 891 399

## Beschreibung

Gegenstand der vorliegenden Erfindung sind Mischungen enthaltend
A) 55 bis 99,4 Gew.-%, bevorzugt 77 bis 99,1 Gew.-% an thermoplastischen, aromatischen Polycarbonaten,
B) 0,5-40 Gew.-% und bevorzugt 0,5-20 Gew.-% Glasfasern und
C) 0,1-5 Gew.-% und bevorzugt 0,4-3 Gew.-% an oxydiertem Polyethylen mit einem M̅n (Zahlenmittel) von 8500 bis 15 000, vorzugsweise von 9000 bis 14 000, bezogen auf 100 Gew.-% an A) + B) + C),
ein Verfahren zur Herstellung der Mischungen, sowie Schäume, die aus den Mischungen hergestellt werden.

Die Mischungen sind schlagzäher als solche ohne Komponente C).

DE-A-1965125 beschreibt Mischungen, enthaltend aromatische Polycarbonate, Glasfasern und nicht oxidiertem Polyethylen.

### Die Komponenten

Die Polycarbonatkomponente A) ist sowohl ein Homopolycarbonat als auch ein Copolycarbonat, wobei auch Mischungen von Polycarbonaten sowohl von Homopolycarbonaten als auch von Copolycarbonaten geeignet sind.

Die Polycarbonate gemäß Komponente A) sollen Gewichtsmittelmolekulargewichte M̅_{w} (ermittelt beispielsweise in bekannter Weise über die relative Lösungsviskosität oder durch Gelchromatographie nach vorheriger Eichung) von 10.000 bis 200.000, vorzugsweise von 20.000 bis 80.000 haben.

Die Polycarbonate gemäß Komponente A) sind solche auf Basis der Diphenole der Formel a)

HO-D-OH a)

worin D ein zweibindiger aromatischer Rest von 6 bis 50 C-Atomen, insbesondere von 12 bis 45 C-Atomen, ist, der noch Heteroatome oder C-haltige Heterosegmente enthalten kann, welche nicht unter den 6 bis 50 C-Atomen subsummiert sind.

Die Polycarbonate haben somit bifunktionelle Struktureinheiten der Formel b) 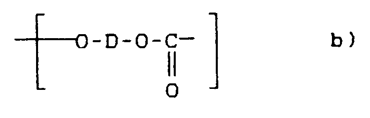
worin D die vorstehend genannte Bedeutung hat.

Die Polycarbonate der Komponente A) können darüber hinaus in bekannter Weise (siehe beispielsweise DE-PS 2 500 092 und US-PS 4 185 009) durch den Einbau geringer Mengen, vorzugsweise zwischen 0,05 und 2 Mol%, bezogen auf eingesetzte Diphenole, an drei oder mehr als dreifunktionellen Verbindungen, beispielsweise solchen mit drei oder mehr als drei OH-Gruppen verzweigt sein.

Einige der verwendeten Verbindungen mit drei oder mehr als drei phenolischen Hydroxygruppen sind beispielsweise Phloroglucin, 4,6-Dimethyl-2,4,6-tri(4-hydroxyphenyl)-heptan, 1,3,5-Tri-(4-hydroxyphenyl)-benzol, 1,1,1-Tri(4-hydroxyphenyl)-ethan, 2,6-Bis-(2'-hydroxy-5'-methyl-benzyl)-4-methylphenol, 2-(4-hydroxyphenyl)-2-(2,4-dihydroxyphenyl)-propan und 1,4-Bis-(4,4'-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Geeignete Diphenole der Formel a) sind beispielsweise solche der Formel a)1) 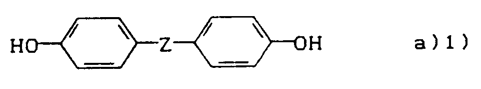
worin Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)-methylen-Rest, -S-, -SO₂-, -CO- oder -O- ist.

Die Herstellung der Polycarbonate der Komponente A), beispielsweise aus den Diphenolen der Formel a)1) ist literaturbekannt oder nach literaturbekannten Verfahren herstellbar. (Siehe dazu beispielsweise H. Schnell, Chemistry and Physics of Polycarbonates, Interscience Publishers, New York, 1964 oder US-Patente 3 028 365 und 3 275 601).

Geeignete Diphenole der Formel a) sind beispielsweise auch solche der Formel a)2) 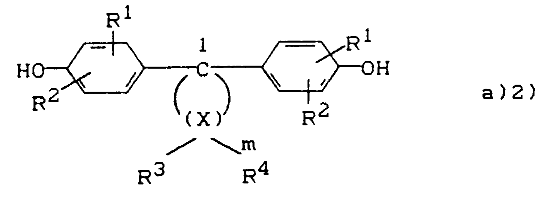
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴,: für jedes X individuell wählbar, unabhängig voneinander Wasserstoff oder C₁-C₆-Alkyl
und
- X: Kohlenstoff bedeuten,
mit der Maßgabe, daß an mindestens einem Atom X R³ und R⁴ gleichzeitig Alkyl bedeuten.

Diese Diphenole sowie Polycarbonate daraus sind in der deutschen Patentanmeldung P 3 832 396.6 (Le A 26 344) beschrieben.

Beispiele für Diphenole der Formel a) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'-Bis(hydroxyphenyl)-diisopropylbenzole.

Diese und weitere geeignete Diphenole der Formel a) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518, in der Monographie "H. Schnell, Chemistry and Physics of Polycarbonates, Interscience Publishers, New York 1964" und in der deutschen Patentanmeldung P 3 832 396.6 (Le A 26 344) beschrieben,

Bevorzugte Diphenole der Formel a) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol und
1,1-Bis-(4-hydroxyphenyl)-3,3,5-trimethylcyclohexan.

Besonders bevorzugte Diphenole der Formel a) sind beispielsweise:
2,2-Bis-(4-hydroxyphenyl)-propan,
1,1-Bis-(4-hydroxyphenyl)-cyclohexan und
1,1-Bis-(4-hydroxyphenyl)-3,3,5-trimethylcyclohexan.

Insbesondere sind 2,2-Bis-(4-hydroxyphenyl)-propan und
1,1-Bis-(4-hydroxyphenyl)-3,3,5-trimethylcyclohexan bevorzugt.

Die Diphenole der Formel a) können sowohl einzeln als auch im Gemisch eingesetzt werden.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alkyl-C₁-C₇-substituierte Phenole. Zur Regelung des Molekulargewichts sind insbesondere kleine Mengen Phenole der Formel c) geeignet 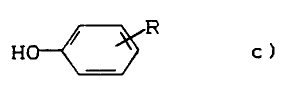
worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

### Komponente B)

Geeignete Glasfasern für die Formmassen der vorliegenden Erfindung sind alle im Handel erhältlichen Glasfasersorten und -typen, also geschnittene Glassorten (Langglasfaser) (chopped strands) und Kurzglas (milled fiberes), sofern sie durch geeignete Schlichten Polycarbonatverträglich ausgerüstet sind. Die zur Herstellung der Formmassen verwendeten Glasfasern sind aus E-Glas hergestellt. Unter E-Glas versteht man nach DIN 1259 ein Aluminium-Bor-Silikat-Glas, mit einem Alkalioxid-Gehalt unter 1 Gew.-%. Üblicherweise werden Glasfasern mit einem Durchmesser von 8-20 »m und eine Länge von 3-6 mm (chopped strands) verwendet und für geschäumte Mischungen vorzugsweise Kurzglas (milled fiberes). Die Glasfasern, die für Schäume Verwendung finden, können auch ungeschlichtet eingesetzt werden.

### Komponente C

Das erfindungsgemäß zu verwendende oxydierte Polyethylen kann durch Lufttoxydation von "High-density-" oder "Low-density"-Polyethylen in bekannter Weise hergestellt werden (siehe GB-Pat. Nr. 918 295). Die geeigneten Molekulargewichte M̅n (Zahlenmittel, ermittelt durch Gelpermeationschromatographie) liegen zwischen 8500 und 15.000, vorzugsweise zwischen 9000 und 14.000. Der Sauerstoffgehalt der erfindungsgemäß einzusetzenden oxydierten Polyethylene beträgt 1 Gew.-% bis 7 Gew.-%.

In den Beispielen wird ein Handelsprodukt der Hoechst AG, das TMPED 191® verwendet. Es besitzt ein Molekulargewicht M̅n (Zahlenmittel, ermittelt durch Gelpermeatochromatographie) von ca. 11.000, eine Säurezahl im Bereich von 10-20, eine Verseifungszahl im Bereich von 25-40 sowie einen Sauerstoffgehalt von ca, 4,5 Gew.-%. Die Verseifungszahl gibt den Gehalt an freien und durch Esterspaltung (Verseifung) entstandenen Gehalt an Carboxylgruppen an.

### Stand der Technik

Es ist bekannt, daß die Festigkeit und Steifheit von thermoplastischen Kunststoffen durch Einarbeitung von Glasfasern erhöht werden können. Eine ausführliche Beschreibung dieser Technologie ist in der Monographie von P.H. Selden "Glasfaserverstärkte Kunststoffe", Springer-Verlag (1967), Seiten 307-344, beschrieben.

Hochmolekulare, thermoplastische aromatische Polycarbonate zeichnen sich besonders durch ihre guten mechanischen, thermischen und elektrischen Eigenschaften aus. Im Vergleich dazu besitzen glasfaserverstärkte hochmolekulare, thermoplastische, aromatische Polycarbonate sowohl eine wesentlich erhöhte Biegefestigkeit und Steifigkeit als auch einen wesentlich erhöhten E-Modul. Dagegen fallen die Schlagzähigkeit, Kerbschlagzähigkeit sowie Reißdehnung von glasfaserverstärkten Polycarbonaten gegenüber entsprechenden unverstärkten Polycarbonaten ab. Die Bemühungen zur Herstellung glasfaserverstärkter Polycarbonate laufen nun darauf hinaus, durch Verwendung von Glasfasern mit geeigneten Glasfaserschlichten sowie Additiven bzw. Haftvermittlern die Haftung zwischen der Faser und der Polycarbonat-Matrix zu erhöhen, um dadurch die zähelastischen Eigenschaften von glasfaserverstärkten Polycarbonat-Formmassen zu verbessern.

Die technische Aufgabe wurde erfindungsgemäß durch Zugabe eines oxidierten Polyethylens gelöst.

Aus der EP-OS 0 007 437 bzw. US-PS 4 313 873 ist bekannt, oxydiertes Polyethylen zu Polycarbonaten oder ABS-Polymerisaten zuzusetzen, um die Herstellung von Treibmmittelkonzentraten zu ermöglichen. Das oxydierte Polyethylen wird hierbei als Verarbeitungsmittel, jedoch nicht als Schlagzähmodifikator eingesetzt.

Aus der DE 3 325 702 A1 der Mobay Chem. Corp. ist bekannt, das oxydierte Homopolymere als ansäurendes Mittel zu Mischungen aus Polycarbonaten und ABS-Polymerisaten gegeben werden. Diese Mischungen haben aber gegenüber den erfindungsgemäßen Mischungen eine schlechtere Wärmeformbeständigkeit und enthalten auch keine Glasfasern.

In der japanischen Anmeldung 57/140 538 wird die Verwendung von oxydiertem Polyethylen mit einem Molekulargewicht M̅n von 1.500 bis 5.000 als Formtrennmittel für Polyestercarbonate beansprucht. Die Mischungen können auch Glasfasern enthalten. Bei der Übertragung auf estergruppenfreie, thermoplastische Polycarbonate stellt man jedoch ein sehr starkes Absinken des mechanischen Polycarbonat-Eigenschaftsniveaus fest.

Überraschenderweise wurde nun gefunden, daß oxydiertes Polyethylen mit M̅n von 8500 bis 15 000 die Schlagzähigkeit und Kerbschlagzähigkeit von glasfaserverstärktem Polycarbonat und glasfaserverstärktem Polycarbonatschaum deutlich verbessert.

Die Herstellung der erfindungsgemäßen Mischungen aus den Komponenten A), B) und C) erfolgt in der Weise, daß man das Polycarbonat mit den Glasfasern und dem oxydiertem Polyethylen bei Temperaturen zwischen 260° C und 360° C, vorzugsweise zwischen 280° C und 320° C schmelzcompoundiert und das erhaltene Gemisch in bekannter Weise abkühlt und granuliert.

Für die Herstellung der erfindungsgemäßen Mischungen können die üblichen Zweiwellenextruder verwendet werden, die zum Mischen von Polycarbonat und Glasfasern geeignet sind.

Die Schmelzcompoundierung wird zwischen 280 bis 360° C durchgeführt.

Gegenstand der vorliegenden Erfindung ist somit auch ein Verfahren zur Herstellung der erfindungsgemäßen Mischungen aus den Kompononten A), B) und C), das dadurch gekennzeichnet ist, daß man das Polycarbonat mit den Glasfasern und dem oxydierten Polyethylen bei Temperaturen zwischen 260° C und 360° C, vorzugsweise zwischen 280° C und 320° C schmelzcompoundiert und das erhaltene Gemisch in bekannter Weise abkühlt und granuliert.

Den erfindungsgemäßen Mischungen können noch die für die Polycarbonate bekannten Additive in bekannten Mengen vor oder während oder nach der Herstellung der erfindungsgemäßen Mischungen in üblichen Mengen eingearbeitet werden.

Geeignete Additive sind Füllstoffe, wie beispielsweise mineralische Füllstoffe, Weichmacher, Fließmittel, Stabilisatoren gegen UV-Licht, Hitze, Feuchtigkeit und gegen O₂-Einwirkung, Pigmente und Flammschutzmittel.

Gegenstand der vorliegenden Erfindung sind somit auch Mischungen bestehend aus den erfindungsgemäßen Komponenten A), B) und C) und mindestens einem Zusatz, ausgewählt aus Füllstoffen, Weichmachern, Fließmitteln, Stabilisatoren, Pigmenten und Flammschutzmitteln.

Gegenstand der vorliegenden Erfindung ist auch ein Verfahren zur Herstellung der erfindungsgemäßen Mischungen, bestehend aus den erfindungsgemäßen Komponenten A), B) und C) und mindestens einem Zusatz, ausgewählt aus Füllstoffen, Weichmachern, Fließmitteln, Stabilisatoren, Pigmenten und Flammschutzmitteln, das dadurch gekennzeichnet ist, daß man vor oder während oder nach der Herstellung der erfindungsgemäßen Mischungen aus den Komponenten A), B) und C) mindestens einen der genannten Zusätze in den für die Komponente A) üblichen Mengen in bekannter Weise einarbeitet.

Die erfindungsgemäßen Mischungen können, in bekannter Weise zu Formkörpern verarbeitet werden, indem man sie beispielsweise auf Spritzgußmaschinen zu verschiedenen Formkörpern verspritzt.

Die erfindungsgemäßen Mischungen können auch mit bekannten Treibmittel bzw. Treibmittelkonzentraten, bestehend aus Polycarbonat und einem Treibmittel, in bekannter Weise abgemischt werden und diese Mischungen können im Spritzgußmaschinen oder Extrusionsanlagen zu geschäumten Formkörpern- bzw. teilen verarbeitet werden.

Als Treibmittel können die gebräuchlichen Schäumungsmittel, wie sie z.B. in der Angewandten Chemie 64 (1952) 65-76, DE-OS 3 602 014, US 3 442 829, 3 779 954 und 4 097 425 beschrieben sind, verwendet werden. Es können dabei auch Treibmittelgemische bzw. -konzentrate eingesetzt werden. Als Beispiele seien genannt anorganische Treibmittel wie Ammoniumcarbonat, Ammoniumhydrogencarbonat, Kalium- bzw. Natriumhydrogencarbonat usw., indifferente Gase wie N₂, CO₂, Luft usw, und organische Treibmittel wie Diazoisobutyronitril, 5-Phenyltetrazol, Benzamide, Dihydrooxadiazinone usw..

Weiterhin können auch Nucleierungsmittel zur Verbesserung der Schaumstruktur zugesetzt werden.

Als Nucleierungsmittel werden beispielsweise Titandioxid, Kreide, Kieselsäure und Talkum verwendet.

Gegenstand der vorliegenden Erfindung sind somit auch Mischungen bestehend aus den erfindungsgemäßen Komponenten A), B) und C) und einem Treibmittel oder einem Treibmittelkonzentrat und gegebenenfalls einem Nucleierungsmittel, Füllstoffen, Weichmachern, Fließmitteln, Stabilisatoren, Pigmenten und/oder Flammschutzmitteln.

Gegenstand der vorliegenden Erfindung ist auch ein Verfahren zur Herstellung der erfindungsgemäßen Mischungen, bestehend aus den erfindungsgemäßen Komponenten A), B) und C) und einem Treibmittel oder einem Treibmittelkonzentrat und gegebenenfalls einem Nucleierungsmittel, Füllstoffen, Weichmachern, Fließmitteln, Stabilisatoren, Pigmenten und/oder Flammschutzmitteln, das dadurch gekennzeichnet ist, daß man vor oder während oder nach der Herstellung der erfindungsgemäßen Mischungen aus den Komponenten A), B) und C) und einem Treibmittel oder einem Treibmittelkonzentrat gegebenenfalls mindestens einen der genannten weiteren Zusätze in den für die Komponente A) üblichen Mengen in bekannter Weise einarbeitet.

Gegenstand der vorliegenden Erfindung sind Schäume, die aus der erfindungsgemäßen Mischung bestehend aus den Komponenten A), B) und C) und einem Treibmittel oder einem Treibmittelkonzentrat sowie gegebenenfalls mindestens einem Zusatz, ausgewählt aus Nucleierungsmitteln, Füllstoffen, Weichmachern, Fließmitteln, Stabilisatoren, Pigmenten und Flammschutzmitteln hergestellt werden.

Die nachstehenden Beispiele mit typischen Einsatzstoffen in typischen Mengen dienen der Erläuterung der Erfindung, ohne sie in irgendeiner Weise einzuschränken.

Für die folgenden Beispiele wurde ein vorgetrocknetes Homopolycarbonat aus 2,2-Bis-(4-hydroxyphenyl)-propan mit einem ηᵣₑₗ von 1,28, gemessen in CH₂Cl₂ bei 25° C und einer Konzentration von 0,5 g in 100 ml CH₂Cl₂ und einem M̅w von etwa 28.000, gelchromatographisch ermittelt und ein oxydiertes Polyethylen, M̅w ca, 23.000, Säurezahl 10-20, Verseifungszahl 25 bis 40 und einem Sauerstoffgehalt von 4,5 % verwendet.

Die mechanischen Werte der aus den Mischungen hergestellten Formkörper sind in Tabelle 1 zusammengestellt.

### Beispiel 1

9,15 kg Polycarbonat werden in einem Doppelwellenextruder bei Temperaturen von 300-320° C aufgeschmolzen. Dann dosiert man eine Mischung aus 0,5 kg Kurzglas (milled fiberes), 0,25 kg Titandioxid und 0,1 kg oxydiertes Polyethylen direkt in die Polycarbonatschmelze. Der Polymerstrang wird gekühlt und granuliert. 10 kg des Granulats werden mit 300 g eines bekannten Polycarbonat-Treibmittelkonzentrats, bestehend aus 5 Gew.-% 5-Phenyltetrazol in Polycarbonat, gemischt und zu Formkörpern mit einer spez. Dichte von 0,9 g cm⁻³ im Spritzgußverfahren geschäumt.

### Vergleichsbeispiel 1

Beispiel 1 wird wiederholt, jedoch ohne Zusatz von 0,1 kg oxydiertes Polyethylen.

Es wurden 9,25 kg Polycarbonat, 0,5 kg Kurzglas (milled fiberes) und 0,25 kg Titandioxid eingesetzt.

Die geschäumten Formkörper wurden wie in Beispiel 1 hergestellt (Dichte 0,9 g/cm³).

### Beispiel 2

8,65 kg Polycarbonat werden in einem Doppelwellenextruder bei Temperaturen von 300-320° C aufgeschmolzen. Dann dosiert man eine Mischung aus 1 kg Glasfasern (chopped strands) 0,25 kg Titandioxid und 0,1 kg oxydiertes Polyethylen direkt in die Polycarbonatsschmelze.

Der Polymerstrang wird gekühlt, granuliert und im Spritzgußverfahren zu Formkörpern verarbeitet.

### Vergleichsbeispiel 2

Beispiel 2 wird wiederholt, jedoch ohne Zusatz von 1 Gew.-% oxydiertes Polyethylen.

Es wurden 8,75 kg Polycarbonat, 1 kg Glasfasern (chopped strands) und 0,25 kg Titandioxid eingesetzt.

**Tabelle 1**

| | Beispiel | | Vergleichsbeispiel | |
|---|---|---|---|---|
| | 1 | 2 | 1 | 2 |
| Charpyschlagzähigkeit ¹) nach DIN 53 453 in kJ/m² | ng | ng | 30 | 50 |
| Izod-Kerbschlagzähigkeit ²) keit nach ISO 180/1C in J/m | 70 | ng | nicht bestimmt | 40 |

| | | | | |
|---|---|---|---|---|
| 1) 50 x 6 x 4 mm Stab | | | | |
| 2) 80 x 10 x 4 mm Stab | | | | |
| ng = nicht gebrochen | | | | |

## Patentansprüche

1. Mischungen enthaltend
A) 55-99,4 Gew.-% an thermoplastischen, aromatischen Polycarbonaten.
B) 0,5-40 Gew.-% Glasfasern und
C) 0,1-5 Gew.-% an oxydiertem Polyethylen mit einem M̅n (Zahlenmittel) von 8500 bis 15 000, bezogen auf 100 Gew.-% an A) + B) + C).

2. Verfahren zur Herstellung der Mischungen des Anspruchs 1, dadurch gekennzeichnet, daß man das Polycarbonat mit den Glasfasern und dem oxydierten Polyethylen bei Temperaturen zwischen 260 und 360°C, vorzugsweise zwischen 280 und 320°C, schmelzcompoundiert und das erhaltene Gemisch in bekannter Weise abgekühlt und granuliert wird.

3. Mischungen gemäß Anspruch 1, bestehend aus den Komponenten A), B) und C) und mindestens einem Zusatz, ausgewählt aus Füllstoffen, Weichmachern, Fließmitteln, Stabilisatoren, Pigmenten und Flammschutzmitteln.

4. Verfahren zur Herstellung der Mischungen des Anspruchs 3 gemäß Anspruch 2, dadurch gekennzeichnet, daß man vor oder während oder nach der Herstellung der Mischungen aus den Komponenten A), B) und C) mindestens einen Zusatz, ausgewählt aus Füllstoffen, Weichmachern, Fließmitteln, Stabilisatoren, Pigmenten und Flammschutzmittel in der für die Komponente A) üblichen Menge in bekannter Weise einarbeitet.

5. Mischungen gemäß Ansprüche 1 und 3, bestehend zusätzlich aus einem Treibmittel oder einem Treibmittelkonzentrat und gegebenenfalls einem Nucleierungsmittel.

6. Verfahren zur Herstellung der Mischungen des Anspruchs 5 gemäß Anspruch 2, dadurch gekennzeichnet, daß man vor oder während oder nach der Herstellung der Mischungen aus den Komponenten A), B) und C) und einem Treibmittel oder einem Treibmittelkonzentrat gegebenenfalls mindestens einen weiteren Zusatz, ausgewählt aus einem Nucleierungsmittel, Füllstoffen, Weichmachern, Fließmitteln, Stabilisatoren, Pigmenten und Flammschutzmitteln in den für die Komponente A) üblichen Mengen in bekannter Weise einarbeitet.

7. Schäume, hergestellt aus den Mischungen des Anspruchs 5.

## Claims

1. Mixtures containing
A) 55 to 99.4% by weight of thermoplastic, aromatic polycarbonates,
B) 0.5 to 40% by weight of glass fibers and
C) 0.1 to 5% by weight of oxidized polyethylene with an M̅n (number average) of 8,500 to 15,000, based on A)+B)+C).

2. A process for the production of the mixtures claimed in claim 1, characterized in that the polycarbonate is melt-compounded with the glass fibers and the oxidized polyethylene at temperatures of 260 to 360°C and preferably at temperatures of 280 to 320°C and the mixture obtained is cooled and granulated in known manner.

3. Mixtures as claimed in claim 1 consisting of components A), B) and C) and at least one additive selected from fillers, plasticizers, flow aids, stabilizers, pigments and flameproofing agents.

4. A process as claimed in claim 2 for the production of the mixtures claimed in claim 3, characterized in that, before or during or after the production of the mixtures of components A), B) and C), at least one additive selected from fillers, plasticizers, flow aids, stabilizers, pigments and flameproofing agents is incorporated in known manner in the usual quantities for component A).

5. Mixtures as claimed in claim 1 and claim 3 additionally consisting of a blowing agent or blowing agent concentrate and optionally a nucleating agent.

6. A process as claimed in claim 2 for the production of the mixtures claimed in claim 5, characterized in that, before or during or after the production of the mixtures of components A), B), and C) and a blowing agent or blowing agent concentrate, at least one other additive selected from a nucleating agent, fillers, plasticizers, flow aids, stabilizers, pigments and flameproofing agents is incorporated in known manner in the usual quantities for component A).

7. Foams produced from the mixtures claimed in claim 5.

## Revendications

1. Mélanges consistant en :
A) 55 à 99,4 % en poids de polycarbonates aromatiques thermoplastiques,
B) 0,5 à 40% en poids de fibres de verte, et
C) 0,1 à 5 % en poids d'un polyéthylène oxydé ayant un poids moléculaire moyen M̅ₙ (moyenne en nombre) de 8500 à 15000, pour 100 % en poids de A)+B)+C).

2. Procédé pour produire les mélanges de la revendication 1, procédé caractérisé en ce qu'on mélange au fondu le polycarbonate avec les fibres de verte et le polyéthylène oxydé, en opérant à des températures comprises entre 260 et 360°C, avantageusement entre 280 et 320°C, et l'on refroidit et granule, de façon connue, le mélange ainsi obtenu.

3. Mélanges selon la revendication 1, consistant en les constituants A), B) et C) en au moins un additif choisi parmi des charges, des plastifiants, des agents de fluidité, des stabilisants, des pigments et des agents de protection contre la flamme.

4. Procédé de préparation des mélanges de la revendication 3, selon la revendication 2, procédé caractérisé en ce que, avant ou pendant ou après la préparation des mélanges formés des constituants A), B) et C), on incorpore au moins un additif choisi parmi des charges, des plastifiants, des agents de fluidité, des stabilisants, des pigments et des agents de protection contre les effets de la flamme, en opérant de façon connue et en utilisant des quantités usuelles pour le constituant A).

5. Mélanges selon les revendications 1 à 3, consistant en outre en un agent gonflant ou porogène ou en concentré d'un tel agent gonflant ou porogène et éventuellement en un agent de nucléation.

6. Procédé de préparation de mélange de la revendication 5, selon la revendication 2, procédé caractérisé en ce que, avant, pendant ou après la production des mélanges formés à partir des constituants A), B) et C) et d'un agent gonflant ou porogène ou d'un concentré d'agent gonflant ou porogène, on incorpore de façon connue, éventuellement au moins un autre additif choisi parmi un agent de nucléation, des charges, des plastifiants, des agents de fluidité, des stabilisants, des pigments et des agents de protection contre la flamme, introduits en des quantités usuelles pour le constituant A).

7. Mousses, produites à partir des mélanges de la revendication 5.
